(19) Europäisches Patentamt
European Patent Office
Office européen des brevets

(11) Publication number: **0 500 092 A1**

# (12) EUROPEAN PATENT APPLICATION

(21) Application number: **92102827.0**

(51) Int. Cl.[5]: **C08G 59/14**, C09D 163/00

(22) Date of filing: **20.02.92**

(30) Priority: **22.02.91 JP 60777/91**

(43) Date of publication of application:
**26.08.92 Bulletin 92/35**

(84) Designated Contracting States:
**AT BE CH DE DK ES FR GB IT LI NL**

(71) Applicant: **THE DOW CHEMICAL COMPANY**
**2030 Dow Center Abbott Road**
**Midland, MI 48640(US)**

(72) Inventor: **Yabu, Yoshimitsu**
**1016-15, Higashi-Tanaka**
**Gotemba-shi, Shizuoka-ken(JP)**
Inventor: **Ohmura, Takahibo**
**1-7-5, Ninooka**
**Gotemba-shi, Shizuoka-ken(JP)**

(74) Representative: **Casalonga, Axel et al**
**BUREAU D.A. CASALONGA - JOSSE**
**Morassistrasse 8**
**W-8000 München 5(DE)**

## (54) Water thinnable epoxy resin and process for preparing same.

(57) A water thinnable epoxy resin prepared by
(1) reacting:
(a) an epoxy resin having an average of greater than one vicinal epoxy group;
(b) a phenolic compound having greater than one hydroxyl group; and
(c) a polyamide dicarboxylic acid having an amine value of not greater than 20 and an acid value of from 20 to 200, prepared by reacting a dimer acid based polymerized fatty acid with diamine at a polymerized fatty acid/diamine molar ratio of from 2:1.0 to 2:1.9,
at a ratio of such that the amount of the polyamide dicarboxylic acid segment in the resin ranges from 0.1 to 50 percent by weight based on the weight of the resin, to obtain a polyamide modified epoxy resin having an acid value of not greater than 5;
(2) reacting the obtained polyamide modified epoxy resin with (d) a phosphoric acid source material to obtain an epoxy phosphate ester resin; and then
(3) hydrolyzing the obtained epoxy phosphate ester resin, is disclosed. A process for preparing the water thinnable epoxy resin is also disclosed.

EP 0 500 092 A1

The present invention relates to a water thinnable epoxy resin and its production process. More particularly, the present invention relates to a water thinnable polyamide modified epoxy phosphate ester resin which can be effectively used in water-borne coating compositions and a process for producing such epoxy phosphate ester resin.

The epoxy resins of the present invention can be used as raw materials for water-borne coating compositions, which are considered preferable from an environmental view point, as well as raw materials for solvent-borne coating compositions. Further, the epoxy resins of the present invention can be dispersed in the form of extremely small particles in a water dispersion, and thus can be effectively used in, for example, spray coating and roll coating.

Epoxy resins have been used in a wide variety of applications such as coating applications because of, for example, their superiority in corrosion resistance, chemical resistance, pollution resistance and flexibility.

Heretofore, epoxy resin based paints used in coating applications such as can coating, have generally been prepared by dissolving an epoxy resin (particularly those having high molecular weight), a curing agent and other additives in an organic solvent.

Recently, various laws and regulations regarding use of organic solvents, such as organic solvent intoxication prevention regulations and fire regulations, have been reinforced. Because of such regulations, it has been desired to make epoxy resins for coating compositions water thinnable or water dispersible.

Several attempts have been made to modify conventional epoxy resins which per se are not water thinnable. For example, self-dispersion type epoxy resins modified with an acrylic resin have been proposed and disclosed in, for example, Japanese Patent Application Laid-Open Gazettes No. Sho 55-3481 and Sho 58-198513.

However, these acrylic resin modified epoxy resins may have poor chemical resistance due to a reaction with a vinyl group containing compound, resulting in loss of excellent properties of an epoxy resin. Further, because this technique requires an additional step of reacting an epoxy resin and acrylic resin, the research activities have been carried out to make an epoxy resin per se water dispersible.

Japanese Patent Publication Gazette No. Hei 1-55299 discloses an epoxy phosphate ester resin prepared by reacting an epoxy resin with phosphoric acid, and then hydrolyzing the phosphoric acid modified epoxy resin for monoesterification. The obtained epoxy resin per se can be made water dispersible. However, the obtained resins have too large particle size when dispersed in water, resulting in poor dispersion stability. Accordingly, if the amount of organic solvent used is restricted, the sufficient dispersion stability cannot be obtained.

Further, extremely severe requirements should be met in performance of resin coatings used in coil coating application (for example, application for home electric apparatus, transportation machines and building materials) or can coating application. For example, so far, in coil coating applications, epoxy resin based coatings have been employed only for primer or inner lining coating due to poor weatherability. Also, in applications requiring good processability and excellent secondary adhesiveness (adhesion to top coating) such as home electric apparatus application, suitable epoxy resins have not been obtained.

Furthermore, in can coating applications, 21 CFR of the Food and Drug Administration regulations in the U.S.A are likely to be considered as standard for food can coatings and beverage can coatings, in addition to the above-mentioned properties.

Japanese Patent Application Laid-Open Gazette No. Hei 2-286709 discloses a polyamide modified epoxy resin which meets the requirements of 21 CFR of the FDA, and has good adhesiveness, flexibility and chemical resistance. However, in this publication, there is no description or suggestion to make such epoxy resins water thinnable. It is possible to modify the resins with an acrylic resin to make them water dispersible. However, in this case, the production process will be complicated, and is disadvantageous. In addition, it is difficult to make the polyamide modified epoxy resins water dispersible by reaction with a phosphoric acid since there are significant differences in the reaction conditions for polyamide modification and the reaction conditions for phosphoric acid modification.

In view of the deficiencies of the prior art described above, it would be desired to provide an epoxy resin which can be made water dispersible without using a complicated process, and can be dispersible in the form of extremely small particles in water dispersion. Such water dispersion can be effectively used for water-borne coatings.

According to one aspect of the present invention, there is now provided a water thinnable epoxy resin prepared by

(1) reacting:

(a) an epoxy resin having an average of greater than one vicinal epoxy group;

(b) a phenolic compound having greater than one hydroxyl group; and

(c) a polyamide dicarboxylic acid having an amine value of not greater than 20 and an acid value of

from 20 to 200, prepared by reacting a dimer acid based polymerized fatty acid with diamine at a polymerized fatty acid/diamine molar ratio of from 2:1.0 to 2:1.9,

at a ratio of such that the amount of the polyamide dicarboxylic acid segment in the resin ranges from 0.1 to 50 percent by weight based on the weight of the resin, to obtain a polyamide modified epoxy resin having an acid value of not greater than 5;

(2) reacting the obtained polyamide modified epoxy resin with (d) a phosphoric acid source material to obtain an epoxy phosphate ester resin; and then

(3) hydrolyzing the obtained epoxy phosphate ester resin.

Another aspect of the present invention relates to a process for preparing a water thinnable epoxy resin, which comprises:

(1) reacting:

(a) an epoxy resin having an average of greater than one vicinal epoxy group;

(b) a phenolic compound having greater than one hydroxyl group; and

(c) a polyamide dicarboxylic acid having an amine value of not greater than 20 and an acid value of from 20 to 200, prepared by reacting a dimer acid based polymerized fatty acid with diamine at a polymerized fatty acid/diamine molar ratio of from 2:1.0 to 2:1.9,

at a ratio of such that the amount of the polyamide dicarboxylic acid segment in the resin ranges from 0.1 to 50 percent by weight based on the weight of the resin, to obtain a polyamide modified epoxy resin having an acid value of not greater than 5;

(2) reacting the obtained polyamide modified epoxy resin with (d) a phosphoric acid source material by adding the phosphoric acid source material dropwise to the polyamide modified epoxy resin, to obtain an epoxy phosphate ester resin; and then

(3) hydrolyzing the obtained epoxy phosphate ester resin.

The above process may further comprise

(4) adding at least one amine compound to the obtained epoxy phosphate ester resin to adjust its pH from 7 to 10; and then (5) adding water dropwise to the obtained resin.

Still another aspect of the present invention relates to a coating composition comprising the epoxy phosphate ester resin as mentioned above.

In the present invention, any known epoxy resins having an average of more than one epoxy group per molecule, can be used as Component (a). Suitable epoxy resins as used herein include, for example, those having an epoxy equivalent of from 170 to 3,500, more suitably from 175 to 1,000, and a weight average molecular weight of from 340 to 18,000, suitably from 340 to 3,000. Such epoxy resins are well described in, for example, U.S. Patent Nos. 4,289,812; 4,397,970; 4,868,059 and 5,070,174, and "The Handbook of Epoxy Resins" by H. Lee and K. Neville, published in 1967 by McGraw-Hill, New York.

Suitable epoxy resins which can be used as Component (a) in the present invention may be represented by the general formula:

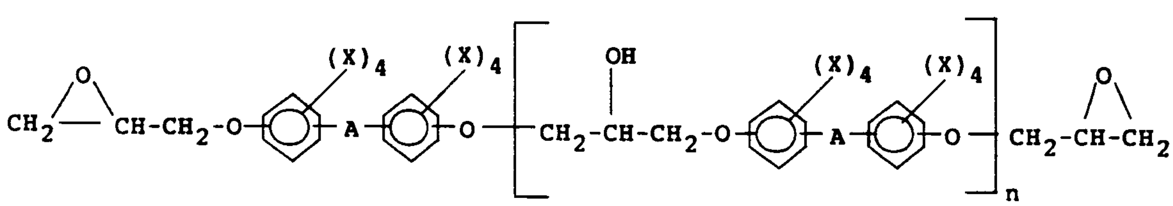

wherein each A is independently a divalent hydrocarbon group having from 1 to 8 carbon atoms, -CO-, -O-, -S-, -S-S-, -S(O)2-, -SO-,

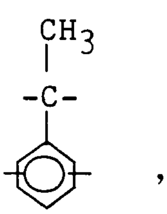

or a covalent bond; each X is independently hydrogen, halogen or an alkyl group of from 1 to 4 carbon

atoms and n is an average value of from 0 to 3 depending on the desired molecular weight of epoxy resin. The epoxy resins can be prepared from epichlorohydrin and a dihydric phenol. Preferred epoxy resins, Component (a) are those having two vicinal epoxy groups such as diglycidyl ethers of bisphenol A, bisphenol K, bisphenol F, bisphenol S, bisphenol AD, brominated derivatives thereof and mixtures thereof. The most preferred epoxy resin is diglycidyl ether of bisphenol A. As commercially available epoxy resins, D.E.R.™ 331L; D.E.R.™ 383J; D.E.R.™ 661; D.E.R.™ 664; D.E.R.™ 667; and D.E.R.™ 669 (Trademark of The Dow Chemical Company) available from The Dow Chemical Company, can be used.

In the present invention, any known phenolic compounds having more than one hydroxyl group per molecule, can be used as Component (b). Such phenolic compounds are well described in, for example, U.S. Patent Nos. 4,289,812; 4,397,970; 4,868,059 and 5,070,174. Suitable phenolic compounds, which can be used in the present invention as Component (b), include, for example, bisphenols such as those represented by the formula:

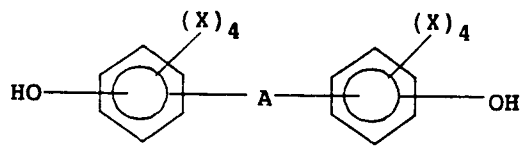

wherein X and A are as defined above. Examples of the suitable epoxy resins are those having two hydroxyl groups such as bisphenol A, bisphenol K, bisphenol F, bisphenol S, bisphenol AD, halogenated derivatives thereof and mixtures thereof. The most suitable phenolic compound is bisphenol A.

In the present invention, Component (a) and Component (b) may be used in an amount to provide a weight ratio of Component (a) to Component (b) of preferably from 60:40 to 100:0, more preferably from 65:35 to 85:15. If the amount of Component (b) used exceeds 40 percent by weight, the amount of the hydroxyl groups contained in the phenolic compound exceeds that of the epoxy groups contained in the epoxy resin, resulting in less amount of the remaining epoxy groups in the resultant products, and the loss of excellent properties derived from the epoxy groups. Also, if the amount of Component (b) used exceeds 40 percent by weight, the next reaction, i.e., phosphorylation cannot be conducted.

In the present invention, polyamide dicarboxylic acids, Component (c) are prepared by reacting a polymerized fatty acid composed mainly of a dimer acid with diamine at a polymerized fatty acid/diamine molar ratio of from 2:1 to 2:1.9, preferably 2:1 to 2:1.2. The polyamide dicarboxylic acids have an amine value of not greater than 20, preferably not greater than 5 and an acid value of 20 to 200, preferably 80 to 100.

The term "polymerized fatty acid composed mainly of dimer acid" refers to those having at least 70, preferably at least 95 percent by weight of a dimer of an unsaturated or saturated fatty acid and the balance to provide 100 percent by weight of a monomer or trimer thereof. The unsaturated fatty acids include a carboxylic acid compound having 12 to 24 carbon atoms (inclusive of the carbon atom of the carboxylic group), preferably 15 to 22 carbon atoms. Examples of the fatty acids useful in the present invention include fatty acids having one unsaturated bond such as oleic acid, elaidic acid and cetoleic acid; fatty acids having two unsaturated bonds such as sorbic acid and linoleic acid; and fatty acids having at least three unsaturated bonds such as linolenic acid and arachidonic acid.

In the present invention, commercially available polymerized acids such as Haridimer™ 300 and Haridimer™ 200 (Trademark of Harima Kasei Kogyo; supplied by the same company), Versadyme™ 288 (Trademark of Henckel-Hakusui Co., Ltd.; supplied by the same company), and Pripol™ 1004 (Trademark of Unichema International; supplied by the same company) can be used.

Suitable diamines which can be used in the present invention are those listed in 21 CFR 175.300 (b)(3)-(viii)(b), for example, ethylene diamine, 4,4'-methylene dianiline and N-oleyl-1,3-propane diamine. These amines can be suitably used for preparation of epoxy resins useful for food can inner coatings. In fields other than food can coatings (e.g., coil coatings), metaxylene diamine, hexamethylene diamine and isophorone diamine can be used as diamine since the FDA is not necessary to be considered.

The reaction between the polymerized fatty acid and the diamine can be carried out at a polymerized fatty acid to diamine molar ratio of 2:1.0 to 2:1.9 while removing water as by-product by a known polymerization process. If the polymerized fatty acid/diamine molar ratio is higher than 2:1.0, the carboxyl group concentration is higher than the amine group concentration, resulting in poor processability of the resultant resin. If the polymerized fatty acid/diamine molar ratio is less than 2:1.9, it is difficult to synthesize a polyamide dicarboxylic acid having an amine value not greater than 20 and an acid value of at least 20. If

the amine value exceeds 20, the resultant coating compositions will have high viscosity, which adversely affects processability. If the acid value is less than 20, the resultant resin will have large molecular weight (e.g., a weight average molecular weight of 100,000 or more), resulting in poor solubility to an organic solvent. It is difficult to synthesize a polymerized fatty acid having an acid value of greater than 200 in view of the acid value of the starting fatty acid.

The polymerized dicarboxylic acids as prepared above, Component (c) are used in an amount of from 0.1 to 50 percent by weight, preferably from 1 to 20 percent by weight, based on the total solid content, i.e., the total amount of Components (a), (b) and (c). If the amount of Component (c) is less than 0.1 percent by weight, the resultant resins will not show the advantages derived from the addition of Component (c). If the amount of Component (c) exceeds 50 percent by weight, the resultant resins will have poor corrosion resistance. In addition, dimer acid alone can be used as Component (c).

In the present invention, the polyamide modified epoxy resins resulting from the reaction of Components (a), (b) and (c) may preferably have an epoxy equivalent weight of from 170 to 5,000, more preferably from 500 to 2,000, and an acid value of not greater than 5, more preferably not greater than 2. The polyamide modified epoxy resins may preferably have a weight average molecular weight of from 340 to 40,000, more preferably from 2,000 to 20,000. If the epoxy equivalent weight is less than 170, the resultant resins will have low content of secondary hydroxyl groups which are said to contribute to adhesiveness, resulting in insufficient adhesiveness, processability and chemical resistance. If the epoxy equivalent weight exceeds 5,000, the resins may encounter gelation during the next reaction step, i.e., the phosphorylation. If the acid value exceeds 5, the resultant resins may not have high flexibility which is an advantageous property of the present invention, due to the remaining carboxyl groups existing at the end of molecules. Thus, it is preferable that the acid value be zero or close to zero.

The polyamide modified epoxy resin, as an intermediate according to the present invention can be prepared by any of the following processes, which are not construed as limiting:

(1) A process comprising reacting an epoxy resin, Component (a) with a phenolic compound, Component (b) at a solid concentration (non-volatile content) of 70 to 100 percent in the presence of a catalyst at a temperature of 120°C to 200°C, and subjecting the resultant solid epoxy resin having an epoxy equivalent of from 500 to 5,000 and a weight-average molecular weight of from 1,000 to 40,000 to polymerization with a polyamide dicarboxylic acid, Component (c) at a solid concentration of from 70 to 100 percent, if desired, in the presence of a catalyst at a temperature of from 120°C to 200°C.

(2) A process comprising reacting Component (a) with Component (b) at a solid concentration of from 80 to 100 percent, if desired, in the presence of a catalyst, at a temperature of from 120°C to 200°C, to obtain a semi-solid or liquid polyamide epoxy ester resin having an acid value not greater than 5, an epoxy equivalent weight of from 180 to 300 and a weight-average molecular weight of from 500 to 3,000; or further reacting the obtained resin with Component (c) at a solid concentration of from 70 to 100 percent in the presence of a catalyst at a temperature of from 120°C to 200°C.

(3) A process comprising condensing Component (b) and Component (c) at a solid concentration of from 80 to 100 percent at a temperature of from 120°C to 200°C, and subjecting the obtained polyamide bisphenol ester resin having an acid value not greater than 5 and a weight average molecular weight of from 500 to 3,000 to polymerization, and reacting the obtained resin with Component (a) at a solid concentration of from 70 to 100 percent in the presence of a catalyst at a temperature of from 120°C to 200°C.

(4) A process comprising condensing Components (a), (b) and (c) at a solid concentration of from 70 to 100 percent at a temperature of from 120°C to 200°C.

In the above-mentioned processes (1) through (4), the reaction time, the reaction temperature, the solid concentration, the kind of catalysts, the amount of the catalysts added can be appropriately selected by a person skilled in the art. Depending upon the other conditions, the reaction time may be generally short and may be from 1 to 15 hours. The reaction temperature may be appropriately determined in view of the catalyst activity. Further, the reaction may be carried out under normal pressure or elevated pressure. The reaction can be carried out in air, but preferably is carried out in an inert gas atmosphere, for example, in a nitrogen current. In the above-mentioned process (3), since water is formed as a by-product by the condensation reaction, the reaction is preferably carried out by using a reaction apparatus equipped with a device capable of removing water.

In the process (1), as the bisphenol type solid epoxy resin, commercially available solid epoxy resins having an epoxy equivalent of from 170 to 5,500 can be used. Examples of the resins used herein are Epikote™ 1001 and Epikote™ 1007 (Trademark of Yuka Shell Epoxy; available from the same company) and D.E.R.™ 661, D.E.R.™ 664 and D.E.R.™ 669 (Trademark of The Dow Chemical Company) available from the same company.

In the above-mentioned processes, in the case of producing a high-molecular-weight polyamide modified epoxy resin, it is possible to perform a uniform reaction by decreasing the viscosity of the reaction mixture with an organic solvent to improve stirring efficiency. Suitable solvents as used herein include inert solvents having a good compatibility with an epoxy resin and a boiling point higher than 110°C, especially higher than 140°C. Examples of the solvents used herein are glycol type solvents such as ethylene glycol and propylene glycol; glycol monoether type solvents such as ethylene glycol monoethyl ether, ethylene glycol monobutyl ether, Dowanol™ EB, Dowanol™ DB and Dowanol™ PnB (Trademark of The Dow Chemical Company); acetate type solvents such as propylene glycol monomethyl ether acetate, butyl acetate and Dowanol™ PMA; alcohol type solvents such as n-butanol, amyl alcohol and cyclohexanol; ketone type solvents such as cyclohexanone and diisobutyl ketone; and aromatic solvents such as xylene and Solvesso™ 100 (supplied by Esso Standard). Of these solvents, acetate type solvent, a ketone type solvent, and an aromatic non-alcoholic solvent are especially preferred. These solvents can be used singly or as a mixture of two or more thereof. The solid concentration of the diluted reaction system may preferably be from 70 to 100 percent. The higher solid concentration is preferable within the allowable viscosity range in view of the restriction to the amount of organic solvent used.

Suitable catalysts which can be used in the present invention include, for example, imidazoles such as 2-methylimidazole; tertiary amines such as triethylamine, tripropylamine and tributylamine; phosphonium salts such as ethyltriphenylphosphonium chloride, ethyltriphenylphosphonium bromide and ethyltriphenylphosphonium acetate•acetic acid complex; and ammonium salts such as benzyltrimethylammonium chloride and benzyltrimethylammonium hydroxide. The catalyst which are described in U.S. Patent Nos. 4,289,812; 4,397,970 and 4,868,059, can be used in the present invention. The amount of the catalysts used generally ranges from 0.001 to 1 weight percent, preferably from 0.01 to 0.1 weight percent, based on the total weight of the reaction mixture.

Next, the process of producing a water thinnable epoxy resin according to the present invention comprises reacting the polyamide modified epoxy resin prepared as above with a phosphoric acid source material, Component (d), and then hydrolyzing the obtained resin for monoesterification, to obtain a polyamide modified epoxy phosphate ester resin.

Phosphoric acid source materials which can be employed in the present invention include, for example, 100 percent phosphoric acid, the semi-hydrate ($2H_3PO_4 \cdot H_2O$) and aqueous solutions containing at least about 18 weight percent $H_3PO_4$ (at least 1 mole $H_3PO_4$ per 25 moles of water). The various condensed forms (polymeric, partial anhydrides) of phosphoric acid, pyrophosphoric acid, orthophosphoric acid and triphosphoric acid can also be used. Preferred are phosphoric acid having a $H_3PO_4$ concentration of from 85 to 120 percent, and more preferred are superphosphoric acid having an $H_3PO_4$ concentration of from 105 to 116 percent.

The phosphoric acid source material may be added dropwise to the polyamide modified epoxy resin at, for example, a temperature of 100°C to 135°C for a period of from 1 to 120 minutes while heating and stirring to complete the reaction.

The amount of the phosphoric acid source material used may preferably range from 0.1 to 5.0 percent by weight, more preferably from 0.5 to 2.0 percent by weight. If the amount of the phosphoric acid source material used is less than 0.1 percent by weight, the resultant resins have a great amount of unreacted epoxy group, resulting in increased viscosity or poor dispersion stability when dispersed in water. If the amount exceeds 5.0 percent by weight, the gelation may occur during the reaction or free phosphoric acid will be formed during the next reaction step. These are disadvantageous. The free phosphoric acid will cause blushing when the coating of the resultant resin is subjected to retort treatment. The phosphoric acid source materials per se can be added dropwise. However, it is effective to use the phosphoric acid source material diluted with water or a hydroxylic solvent such as the above-mentioned glycol monoether type solvent. The use of the hydroxyl group-containing solvents prevents self-condensation of the phosphoric acid source materials, resulting in a uniform reaction. These solvents can be used in an amount to provide a molar ratio of a solvent to a phosphoric acid source material of 2:1 to 4:1.

The polyamide modified epoxy phosphate ester resins prepared as above are mainly in the form of triesters or diesters, and thus can be changed to monoesters by subjecting them to monoesterification. The monoesterification can reduce the viscosity of the resultant modified epoxy phosphate ester resins to make handling easier. Further, the phosphoric acid residues existing at the end of molecules can provide good corrosion resistance inherently possessed by the phosphoric acid. Further, the phosphoric acid residues may catalyze curing of the resultant coated film and may provide flexibility to the coated film. The hydrolyzed modified epoxy phosphate ester resins contain a small quantity of diesters, triesters and free phosphoric acid in addition to monoesters, but contain almost no epoxy groups.

In the process of the present invention, the polyamide modified epoxy phosphate ester resins can be

made water dispersible by adding at least one amine compound to the resin to adjust its pH from 7 to 10, adding dropwise water, and then stirring the obtained product. If the pH of the adjusted polyamide modified epoxy phosphate ester resin is outside the pH range from 7 to 10, the resultant water dispersion will have poor dispersion stability.

Suitable amine compounds which can be used in the present invention include, those described in U.S. Patent Nos. 4,289,812 and 4,397,970, for example, alkanol amines such as N,N-dimethylethanol amine. Particularly preferred is an amine mixture prepared by mixing N,N-dimethylethanol amine and diethanol amine at a weight ratio of 50:50 to 70:30.

In the present invention, neutralization can be effected at room temperature. However, if the reaction mixture has high viscosity due to its high solid content or use of resins with high molecular weight, the reaction mixture can be heated at a temperature lower than the boiling point of the amine compound used.

In the case of adding water to the neutralized modified epoxy phosphate ester resin, lower water adding rate, more vigorous agitation and longer agitation will result in smaller particle size of the resins when dispersed in water. Further, to improve agitation efficiency, the reaction mixture may be heated to reduce the viscosity of the reaction mixture. In general, the addition of water and the agitation of the reaction mixture are carried out at 20 °C to 90 °C in view of the boiling point of water and the amine compound used. The water addition and the agitation thereafter can be conducted for 30 minutes or more, preferably from 1 to 10 hours, respectively. If the time for the water addition is less than 30 minutes, the resultant resins will have large particle size when dispersed in water, resulting in poor dispersion stability. The amount of water added may generally be greater than that of the organic solvent added.

The polyamide modified epoxy phosphate ester resins of the present invention can be incorporated with water and known curing agents to prepare a water-borne coating composition. The water-borne coating composition may be a water dispersion which contains a resin having an average particle size of preferably from 10 nm to 2 microns, more preferably from 10 nm to 1 micron dispersed therein.

The polyamide modified epoxy phosphate ester resins of the present invention can also be used to prepare a solvent-borne coating composition. Suitable organic solvents which can be used as diluent to adjust viscosity include, for example, the above-mentioned glycol type solvents, glycol monoether type solvents, alcohol type solvents, aromatic type solvents and ketone type solvents (such as methyl ethyl ketone, methyl isobutyl ketone and cyclohexanone).

If desired, these coating compositions may comprise an appropriate amount of a reaction accelerator, dye, pigment, filler, surfactant, flow modifier and mixtures thereof.

As mentioned above, according to the present invention, epoxy resins can be made water dispersible, and can be dispersed in water in the form of extremely fine particles. Accordingly, the epoxy resins according to the present invention can be effectively used in coating applications such as spray coating and roll coating.

Examples and Comparative Examples

The present invention will now be described in more detail with reference to the following Examples and Comparative Examples, which are not construed as limiting. In the Examples and Comparative Examples, all of the percentages and parts are by weight unless otherwise indicated.

Polyamide Dicarboxylic Acid Synthesis Example

A reaction vessel was charged with 950 parts of C36-dimer acid [Haridimer™ 300 (manufactured by Harima Kasei Kogyo) monomer = 1 percent; dimer = 97 percent; trimer = 2 percent; acid value 195 mgKOH/g] and 53 parts of ethylene diamine. The reaction was carried out in a nitrogen current at 60 °C for 30 minutes in the absence of a catalyst. Then the temperature was elevated to 240 °C over a period of 2 hours by heating. The reaction mixture was maintained at this temperature for 3 hours, and naturally cooled to room temperature.

The polyamide dicarboxylic acid obtained had an amine value of 1 and an acid value of 91 mgKOH/g.

Examples 1 to 6

A reaction vessel equipped with a condenser was charged with a diglycidyl ether of bisphenol A (D.E.R.™ 331L; Trademark of The Dow Chemical Company), bisphenol A and a 70 percent methanol solution of ethyltriphenylphosphonium acetate•acetic acid complex at a ratio as indicated in Table 1. The reaction was carried out in a nitrogen current at 160 °C for 1 hour. Thereafter, a mixed solvent containing

Dowanol™ PM and Dowanol™ EB (1:1 weight ratio) was added to the reaction mixture to adjust a solid concentration from 72 to 77 percent and to cool the reaction mixture to 125°C.

And then, a solution prepared by diluting phosphoric acid having a concentration of 105 percent in an amount, as indicated in Table 1, 4 times as much moles of a mixed solvent containing Dowanol™ PM and Dowanol™ EB (1:1 weight ratio) as that of phosphoric acid, was added dropwise to the reaction product over a period of 20 minutes for reaction. Water was added to the reaction product in an amount as indicated in Table 1 for hydrolysis to obtain polyamide modified epoxy phosphate ester resins.

The amount of the starting materials used in Examples 1 to 6 are also as shown in Table 1 in parts by weight.

Table 1

| Example | Component (a) | Component (b) | Component (c) | Component (d) | Water | Catalyst |
|---|---|---|---|---|---|---|
| Ex. 1 | 329 | 166 | 5 | 4 | 10 | 0.5 |
| Ex. 2 | 319 | 156 | 25 | 4 | 10 | 0.5 |
| Ex. 3 | 489 | 231 | 80 | 6 | 17 | 0.7 |
| Ex. 4 | 281 | 119 | 100 | 4 | 10 | 0.4 |
| Ex. 5 | 497 | 263 | 40 | 6 | 17 | 0.7 |
| Ex. 6 | 490 | 270 | 40 | 6 | 17 | 0.7 |

The resins obtained as above were heated to 80°C, and subjected to neutralization with a mixture of N,N-dimethylethanol amine and diethanol amine to adjust its pH from 7 to 10. Thereafter, to each of the thus obtained resins, water was added dropwise over a period of 1 hour, and the mixture was stirred for 1 hour, to obtain water dispersions.

Comparative Example 1

A reaction vessel equipped with a condenser was charged with 385 parts of a diglycidyl ether of bisphenol A (D.E.R.™ 331L; Trademark of The Dow Chemical Company), 115 parts of bisphenol A and 0.1 parts of ethyltriphenylphosphonium acetate.acetic acid complex (in a 70 percent methanol solution). The reaction was carried out in a nitrogen current at 175°C for 1 hour, to obtain an epoxy resin having an epoxy equivalent of 460. Thereafter, 50 parts of Dowanol™ EB was added to the reaction mixture to cool the reaction mixture to 130°C.

And then, a solution prepared by diluting 3 parts of phosphoric acid having a concentration of 105 percent with 12 parts of Dowanol™ EB, was added dropwise to the reaction product over a period of 30 minutes for reaction. To this, 10 parts of water was added for hydrolysis to obtain an epoxy phosphate ester resin which was not modified with polyamide.

The resin obtained as above was heated to 80°C, and subjected to neutralization with a mixture of N,N-dimethylethanol amine and diethanol amine to adjust its pH from 7 to 10. Thereafter, to the thus obtained resin, water was added dropwise over a period of 1 hour, and the mixture was stirred for 1 hour, to obtain a water dispersion.

Comparative Example 2

To a reaction vessel equipped with a condenser, 250 parts of a diglycidyl ether of bisphenol A (D.E.R.™ 669E (Trademark of The Dow Chemical Company) was mixed with 90 parts of Dowanol™ EB, and dissolved by heating at 125°C. Thereafter, a solution prepared by diluting 2 parts of phosphoric acid having a concentration of 105 percent with 12 parts of Dowanol™ EB, was added dropwise to the reaction product over a period of 30 minutes for reaction. To this, 5 parts of water was added for hydrolysis to obtain an epoxy phosphate ester resin which was not modified with polyamide.

The resins obtained as above were heated to 80°C, and subjected to neutralization with a mixture of N,N-dimethylethanol amine and diethanol amine to adjust its pH from 7 to 10. Thereafter, to the thus obtained resin, water was added dropwise over a period of 1 hour, and the mixture was stirred for 1 hour, to

obtain a water dispersion.

The properties of the resins obtained are as shown in Table 2. In Table 2, "N. V." means the amount of non-volatile components contained in the final products; "Mw" means a weight average molecular weight of the resins; "pH" means a pH of the dispersions obtained; "Particle Size" means a particle size of the resins dispersed; and "Appearance" means the appearance of the dispersions obtained. The weight average molecular weight was measured with a Gel Permeation Chromatography (manufactured by Hewlett Packard). The particle size was measured with a laser scattering particle size distribution analyzer (HORIBA LA-500). The pH was measured with AT-210 manufactured by Kyoto Electronics.

Table 2

| Example | N. V. (%) | Organic Solvent (%) | Mw | Particle Size (μ) | pH | Appearance |
|---|---|---|---|---|---|---|
| Ex. 1 | 35 | 12 | 18,000 | 0.6 | 7.8 | milky liquid |
| Ex. 2 | 35 | 12 | 18,000 | 0.4 | 8.1 | milky liquid |
| Ex. 3 | 35 | 10 | 18,500 | 0.4 | 8.2 | milky liquid |
| Ex. 4 | 35 | 14 | 19,500 | 0.8 | 9.1 | milky liquid |
| Ex. 5 | 35 | 12 | 18,500 | 0.7 | 7.6 | milky liquid |
| Ex. 6 | 35 | 14 | 21,000 | 1.0 | 7.6 | milky liquid |
| Comp. Ex. 1 | 40 | 5 | 2,300 | - | - | white solid |
| Comp. Ex. 2 | 28 | 12 | 16,000 | 9.9 | 8.6 | milky liquid |

As apparent from the results as shown in Table 2, in Examples 1 to 6, milky dispersions containing epoxy resins having a fine particle size of from 0.4 to 1.0 micron dispersed therein, were obtained. Accordingly, it was confirmed that the resins obtained according to the present invention can be effectively used for water-borne coatings. On the other hand, in Comparative Example 1, the resultant product was obtained in the solid form, and a dispersion was not obtained. In Comparative Example 2, a dispersion containing a resin having a coarse particle size of 9.9 microns, was obtained.

## Claims

**1.** A water thinnable epoxy resin prepared by
(1) reacting:
(a) an epoxy resin having an average of greater than one vicinal epoxy group;
(b) a phenolic compound having greater than one hydroxyl group; and
(c) a polyamide dicarboxylic acid having an amine value of not greater than 20 and an acid value of from 20 to 200, prepared by reacting a dimer acid based polymerized fatty acid with diamine at a polymerized fatty acid/diamine molar ratio of from 2:1.0 to 2:1.9,
at a ratio of such that the amount of the polyamide dicarboxylic acid segment in the resin ranges from 0.1 to 50 percent by weight based on the weight of the resin, to obtain a polyamide modified epoxy resin having an acid value of not greater than 5;
(2) reacting the obtained polyamide modified epoxy resin with (d) a phosphoric acid source material to obtain an epoxy phosphate ester resin; and then
(3) hydrolyzing the obtained epoxy phosphate ester resin.

**2.** An epoxy resin according to Claim 1, wherein Component (a) is selected from glycidyl ethers of bisphenol A, bisphenol K, bisphenol F, bisphenol S, bisphenol AD and mixtures thereof.

**3.** An epoxy resin according to Claim 1, wherein Component (b) is selected from bisphenol A, bisphenol K, bisphenol F, bisphenol S, bisphenol AD and mixtures thereof.

**4.** An epoxy resin according to Claim 1, wherein the polymerized fatty acid of Component (c) is selected from oleic acid, elaidic acid, cetoleic acid, sorbic acid, linolenic acid, linoleic acid and arachidonic acid.

**5.** An epoxy resin according to Claim 1, wherein the diamine of Component (c) is selected from ethylene diamine, 4,4'-methylene dianiline, N-oleyl-1,3-propane diamine, metaxylene diamine, hexamethylene diamine, isophorone diamine and mixtures thereof.

6. An epoxy resin according to Claim 1, wherein Component (d) is a phosphoric acid aqueous solution having a phosphoric acid concentration of at least 18 percent, a phosphoric acid organic solution or a phosphoric acid concentrate.

7. A process for preparing a water thinnable epoxy resin, which comprises:
(1) reacting:
(a) an epoxy resin having an average of greater than one vicinal epoxy group;
(b) a phenolic compound having greater than one hydroxyl group; and
(c) a polyamide dicarboxylic acid having an amine value of not greater than 20 and an acid value of from 20 to 200, prepared by reacting a dimer acid based polymerized fatty acid with diamine at a polymerized fatty acid/diamine molar ratio of from 2:1.0 to 2:1.9,
at a ratio of such that the amount of the polyamide dicarboxylic acid segment in the resin ranges from 0.1 to 50 percent by weight based on the weight of the resin, to obtain a polyamide modified epoxy resin having an acid value of not greater than 5;
(2) reacting the obtained polyamide modified epoxy resin with a phosphoric acid source material by adding the phosphoric acid source material dropwise to the polyamide modified epoxy resin, to obtain an epoxy phosphate ester resin; and then
(3) hydrolyzing the obtained epoxy phosphate ester resin.

8. A process according to Claim 7, which further comprises (4) adding at least one amine compound to the obtained epoxy phosphate ester resin to adjust its pH from 7 to 10; and then (5) adding water dropwise to the obtained resin.

9. A process according to Claim 7, wherein Component (a) is selected from glycidyl ethers of bisphenol A, bisphenol K, bisphenol F, bisphenol S, bisphenol AD and mixtures thereof.

10. A process according to Claim 7, wherein Component (b) is selected from bisphenol A, bisphenol K, bisphenol F, bisphenol S, bisphenol AD and mixtures thereof.

11. A process according to Claim 7, wherein the polymerized fatty acid of Component (c) is selected from oleic acid, elaidic acid, cetoleic acid, sorbic acid, linolenic acid, linoleic acid and arachidonic acid.

12. A process according to Claim 7, wherein the diamine of Component (c) is selected from ethylene diamine, 4,4'-methylene dianiline, N-oleyl-1,3-propane diamine, metaxylene diamine, hexamethylene diamine, isophorone diamine and mixtures thereof.

13. An epoxy resin according to Claim 7, wherein Component (d) is a phosphoric acid aqueous solution having a phosphoric acid concentration of at least 18 percent, a phosphoric acid organic solution or a phosphoric acid concentrate.

14. A coating composition comprising an epoxy resin according to any of claims 1 to 6.

European Patent Office

# EUROPEAN SEARCH REPORT

Application Number

EP 92102827.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 4 820 784 (MASSINGILL, Jr. et al.) * Example 1; Claims * | 1-3,6, 7,9, 10,13, 14 | C 08 G 59/14<br>C 09 D 163/00 |
| A<br>D | GB - A - 1 597 610 (THE DOW CHEMICAL) * Claims *<br>& JP-B-1-55 299 | 1-3,6, 7-10, 14 | |
| A<br>D | EP - A - 0 394 887 (THE DOW CHEMICAL) * Claims *<br>& JP-A-286 709 | 1-5,7-12,14 | |
| A | US - A - 4 721 742 (BETRAM et al.) * Example 1; claims * | 1,2,7, 9 | |
| D,A | US - A - 4 397 970 (CAMPBELL et al.) * Example 1; claims * | 1,2,6, 7,9, 13,14 | TECHNICAL FIELDS SEARCHED (Int. Cl.5)<br>C 08 G 59/00<br>C 09 D 163/00<br>C 08 G 81/00 |

The present search report has been drawn up for all claims

| Place of search | Date of completion of the search | Examiner |
|---|---|---|
| VIENNA | 14-05-1992 | KÖRBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document